# EUROPÄISCHE PATENTSCHRIFT

(11) **EP 1 082 202 B1**
(45) Veröffentlichungstag und Bekanntmachung des Hinweises auf die Patenterteilung: **13.07.2005**
(21) Anmeldenummer: 99953314.4
(22) Anmeldetag: 25.05.1999
(51) Int. Cl.: B29C 33/60, B29C 37/00, C10M 173/00, C10M 125/14

(54) **Verwendung eines Trennmittels**
Use of a release agent
Utilisation d'un agent de démoulage

(30) Priorität: 28.05.1998 DE 19823883; 28.05.1998 DE 19824279
(43) Veröffentlichungstag der Anmeldung: 14.03.2001
(73) Patentinhaber: Acmos Chemie Gmbh & Co., 28199 Bremen (DE)
(72) Erfinder: WOCHNOWSKI, Horst, D-22844 Norderstedt (DE); DIERS,Angela, D-76532 Baden-Baden (DE); SCHNEIDER, Valentina, D-28259 Bremen (DE); NIEMEYER, Peter, D-27755 Delmenhorst (DE)
(74) Vertreter: Winkler, Andreas, Dr.
(86) Internationale Anmeldenummer: PCT/EP1999/003575
(87) Internationale Veröffentlichungsnummer: WO 1999/061215

(56) Entgegenhaltungen:
- EP-A- 0 164 501
- WO-A-95/15812
- DE-A- 4 322 035
- GB-A- 2 249 556
- US-A- 5 219 479
- G. SCHUSTER: "Herstellung und Stabilisierung von Lebensmittelemulsionen" SOFW-JOURNAL SEIFEN, OELE, FETTE, WACHSE., Bd. 107, Nr. 14/1981, 3. - 3. September 1981, Seiten 391-402, XP002114781 VERLAG FUR CHEMISCHE INDUSTRIE, H. ZIOLKOWSKY K.G. AUGSBURG., DE ISSN: 0942-7694
- FALBE : "Römpp Chemie Lexikon" [Online] 1995 , GEORG THIEME VERLAG , STUTTGART XP002114782 Seite 4401 - Seite 4402 Seite 1158 - Seite 1159

## Beschreibung

Die Erfindung betrifft die Verwendung eines Trennmittels, das als trennwirksame Substanzen Öle, Wachse, Silikone und/oder Seifen enthält, sowie Emulgatoren und andere übliche Additive, in einem Träger.

Die Herstellung von Formteilen aus Polyurethanschaum erfordert - zur leichten und sauberen Entnahme der in den aus Metall, Holz oder Kunststoff bestehenden Formen aus - polymerisierten Formschaumteilen - die Behandlung der mit den schaumbildenden Komponenten bzw. dem Polyurethanschaum in Kontakt tretenden Formoberflächen sog. Trennmitteln. Zu diesem Zweck werden die Werkzeugoberflächen unter Erzeugung eines Trennfilms mit einem gleichmäßigem Überzug aus einem Trennmittel versehen, wofür verschiedene spritz- und sprühtechnische Verfahren aus dem Stand der Technik bekannt sind.

Die zur Zeit industriell eingesetzten Trennmittel zum Entformen von Formteilen enthalten üblicherweise in einem Träger dispergierte trennwirksame Substanzen, wie bspw. Öle, Wachse, Silikone und/oder Seifen. Als Träger kommen entweder organische Lösungsmittel oder Wasser in Betracht. Dabei dienen das organische Lösungsmittel und das Wasser nicht nur als Träger für die trennaktiven Wirkstoffe und als Lösungsmittel für weitere Additive, sondern auch zum Einstellen einer optimalen Konzentration, als Hilfsmittel beim Benetzen und Verlauf und bei der Bildung des Trennmittelfilmes sowie zur Beeinflussung der Polyurethan-Formteiloberfläche. Wirtschaftlichkeit, Betriebssicherheit und Umweltverträglichkeit sind weitere Anforderungen an den Träger.

Das stark gestiegene Interesse am Umweltschutz und die damit einhergehenden verschärften gesetzlichen Bestimmungen führen zu dem Bestreben, flüchtige organische Lösungsmittel (sog. VOCs) auf ein vertretbares Minimum zu reduzieren. Daher ist Wasser wegen seiner Unbedenklichkeit im Hinblick auf Gesundheit und Umweltschutz in den letzten Jahren als Träger- bzw. Verdünnungsmedium für Trennmittel stärker in den Mittelpunkt des Interesses gerückt.

Wasser als Trägermedium in Trennmitteln für Polyurethan-Formschaumteile besitzt allerdings eine Reihe von Nachteilen, die spezielle Anpassungen erfordern (siehe hierzu: H. Wochnowski, Kunststoffe 79/1989, 8, S. 680-683; H.H. Block, Kunststoffe 79 (1989) 3, S. 214-242). Zu den Bestrebungen der Entwicklung wässriger Trennmittel sei im übrigen auf die EP-A-0 164 501, die EP-A-0 188 219 und die EP-A-0 272 629 verwiesen.

Die Nachteile der rein wässrigen Trennmittel-Systeme gegenüber Trennmitteln auf der Basis von organischen Lösungsmitteln liegen im Bereich der Formen-Umfeldverschmutzung, der Unmöglichkeit der Reinigung der Form durch Schmelzen des Rückstandes und dadurch erhöhter Reinigungskosten sowie (in vielen Fällen nicht erwünschte) geschlossene und zum Teil fettige Polyurethan-Formteiloberflächen.

Aus GB 2,249,556A ist die Verwendung von Wasser-in-Öl-Dispersionen als Schmiermittel in der Metallverarbeitung bekannt, wobei die Teilchengröße der Wasserphase so eingestellt wird, um eine feine Teilchengrößenverteilung bereitzustellen.

Aus der DE 43 22 035A1 sind Trennmittelbeschichtungen zum Auftragen auf Papier, Kunststoff, Textilgewebe oder Metalle bekannt, die mit einer Klebstoffbeschichtung versehen sind, wobei die-Trennmittelbeschichtung aus einem Gemisch aus bis zu 99,9% Wachs, einem Anteil an Öl und einem Anteil an einem Kohlenwasserstoff gebildet ist.

EP 0 164 501 A2 offenbart ein Trennmittel, das sich für die Herstellung von Gegenständen aus Polyurethanschaum eignet, mit einer wäßrigen Dispersion aus an sich bekannten trennwirksamen Substanzen sowie gegebenenfalls üblichen Zusätzen mit einem Wassergehalt von mindestens 60 Gewichtsprozent, wobei das Wasser durch den Effekt der lyotropen Mesomorphie maskiert ist.

WO 95/15812 A1 offenbart Wasser-in-Öl-Dispersionen, die Wasser, Öl und ein Emulgatorsystem umfassen. Die Wasser-in-Öl-Emulsionen können als Polituren, Sonnenmilch, Hautcremes und -lotionen und Haarbehandlungszusammensetzungen eingesetzt werden.

Der vorliegenden Erfindung liegt daher die Aufgabe zugrunde, eine Verwendung eines Trennmittels vorzuschlagen, das die geschilderten Nachteile der bekannten rein wässrigen Trennmittel überwindet und gleichzeitig deutlich umweltfreundlicher ist als die bisherigen Trennmittel-Systeme auf der Basis von organischen Lösungsmitteln.

Erfindungsgemäß wird die Aufgabe durch die Verwendung gemäß Anspruch 1 gelöst.

Weiterhin ist bevorzugt vorgesehen, daß der (die) Kohlenwasserstoff(e) einen Siedepunkt zwischen 60 und 240°C aufweist (aufweisen).

Außerdem kann vorgesehen sein, daß der Wasseranteil in einem Bereich zwischen 10 und 70 Gew.% liegt.

Bevorzugt ist vorgesehen, daß der Wasseranteil bei maximal 60 Gew.-% liegt.

Wesentliches Merkmal der neuentwickelten und in ihrer Wirkung durch entsprechende Versuchsreihen positiv bestätigten Kohlenwasserstoff(KW)/Wasser-Mischungen als Trägermedium für trennwirksame Substanzen liegt darin, daß das Trennmittel-System als Wasser-in-Öl(W/O)-Dispersion vorliegt, d.h. das Wasser von dem (den) Kohlenwasserstoff(en) umhüllt wird. Dabei soll der Begriff "Dispersion" in seiner breiten Bedeutung als ein System aus mehreren Phasen verstanden werden, von denen eine kontinuierlich (Dispersionsmittel) und mindestens eine weitere darin fein verteilt ist (dispergierte Phase). Hierunter sind im vorliegenden Zusammenhang insbesondere auch Suspensionen, Emulsionen und Mikroemulsionen zu verstehen.

Der für die vorliegende Erfindung verwendete Kohlenwasserstoff ist insbesondere eine Substanz mit einem Siedepunkt zwischen 60 und 240°C, d.h. ein Kohlenwasserstoff mit etwa 5 bis etwa 14 Kohlenstoffatomen. Selbstverständlich können auch die unterschiedlichsten Mischungen von Kohlenwasserstoffen eingesetzt werden, wie insbesondere kommerziell erhältliches Testbenzin oder Isoparaffin-Mischungen mit einem bestimmten Siedepunktbereich.

Ein charakteristisches Merkmal des Trennmittels besteht darin, daß es mit dem verwendeten Kohlenwasserstoff als Lösungsmittel verdünnt werden kann. Aufgrund des Charakters als Wasser-in-Öl-System ist ebenfalls eine niedrigere elektrische Leitfähigkeit zu beobachten.

Zur Herstellung der Wasser-in-Öl-Dispersion sind Emulgatoren erforderlich. Hierfür können die aus dem Stand der Technik bekannten und üblicherweise als Emulgatoren eingesetzten anionischen, kationischen oder nicht-ionischen Tenside verwendet werden.

Während die herkömmlichen wässrigen Trennmittel-Systeme Öl-in-Wasser(O/W)-Dispersionen darstellen, d.h. wasser-verdünnbar sind und damit die obengenannten bekannten Nachteile aufweisen, zeigen die vorgeschlagenen emissionsreduzierten Kohlenwasserstoff/Wasser-Trennmittelsysteme durch ihren hohen Wasseranteil umweltfreundlichere Eigenschaften gegenüber bekannten Systemen auf Lösungsmittelbasis (ökologischer Vorteil aufgrund der VOC-Reduzierung), liefern darüber hinaus aber auch Entformungsqualitäten, die den bisher bekannten wässrigen Trennmitteln weit überlegen sind und die von Trennmitteln auf Lösungsmittelbasis bekannte Qualität erreichen (verminderter Reinigungsaufwand der Formen, längere Reinigungszyklen, positive Beeinflussung der PUR-Oberfläche).

Aus den nachfolgenden Beispielen 1 bis 3 ergeben sich Trennmittelformulierungen, die für unterschiedliche Einsatzbereiche konzipiert worden sind. Beispiel 4 betrifft ein typisches Herstellungsverfahren für ein Trennmittel.

### Beispiel 1:

Das Trennmittel der folgenden Zusammensetzung ist insbesondere für den Einsatz im Bereich von halbstarrem Polyurethan mit integraler Haut konzipiert. Als trennwirksame Substanz wird eine Mischung aus Wachs und Silikon eingesetzt. Die verwendete Kohlenwasserstoffmischung ist ein kommerziell erhältliches Testbenzin mit einem Siedebereich zwischen 145°C und 160°C. Der zugesetzte Katalysator, beispielsweise ein Zinn-Katalysator, dient der Verbesserung der Oberflächenqualität des hergestellten Polyurethan-Formschaumteils.

| | |
|---|---|
| 4,6000 % | Wachs (Gemisch aus KW-Wachsen, z.T. metallseifenhaltig) |
| 10,2000 % | Silikon (Gemisch aus Polydimethylsiloxan, Harz und Öl) |
| 0,7000 % | Katalysator (Di-n-butylzinncarboxylat) |
| 0,1875 % | Tensid (Alkylsulfonsäureester des Phenols) |
| 1,3275 % | Mattierungsmittel, Lösevermittler (amorphes SiO₂, Ethanol) |
| 60,3850 % | Testbenzin |
| 22,6000 % | Wasser |

### Beispiel 2:

Das wie folgt formulierte Trennmittel ist speziell für den Einsatz bei der Herstellung von Schuhsohlen aus PUR-Schaum konzipiert. Als trennwirksame Substanz wird eine Mischung aus Silikon und paraffinischem Mineralöl eingesetzt. Der verwendete Kohlenwasserstoff ist eine Isoparaffinmischung mit einem Siedepunktbereich zwischen 187°C und 212°C.

| | |
|---|---|
| 12,0000 % | Silikon (Polydimethylsiloxan, Harz) |
| 28,0000 % | paraffinisches Mineralöl |
| 0,5000 % | Tensid (Na-Polyaldehydcarboxylat) |
| 24,5000 % | Isoparaffinmischung |
| 35,0000 % | Wasser |

### Beispiel 3:

Das folgende Trennmittel ist für die Verwendung im PUR-Kaltweichschaumbereich konzipiert. Hierfür werden als trennwirksame Substanzen Wachse eingesetzt. Der eingesetzte Kohlenwasserstoff ist eine Isoparaffinmischung mit einem Siedepunktbereich zwischen 187°C und 212°C.

| | |
|---|---|
| 6,5280 % | Wachse (Gemisch aus KW-Wachsen, z.T. metallseifenhaltig) |
| 2,2600 % | Tenside, Emulgatoren (Silikon-Glykol-Copolymer, nichtionischer Emulgator) |
| 1,8796 % | Gleitmittel, andere Additive (Fettamin, Biozid) |
| 64,6324 % | Isoparaffinmischung |
| 24,7000 % | Wasser |

### Beispiels 4:

Zur Herstellung eines Trennmittels gemäß Beispiel 1 wird in einem ersten Behälter eine erste Mischung aus dem Wasser und ggf. dem Tensid hergestellt. In einem zweiten Behälter wird eine zweite Mischung hergestellt, bei der das Wachs, der Katalysator und die übrigen Additive in das Testbenzin eingemischt werden. In einem dritten Behälter wird das flüssige Silikon vorgelegt.

Zunächst wird der Inhalt des ersten Behälters, d.h. die erste Mischung aus Wasser und Tefisid durch kräftiges Rühren homogenisiert. Anschließend wird der Inhalt des zweiten Behälters langsam in der ersten Mischung im ersten Behälter unter Homogenisieren dispergiert. Abschließend wird noch das Silikon aus dem dritten Behälter zugegeben und die Mischung erneut einhomogenisiert.

Auf diese Art kann in effektiver Weise die gewünschte Wasser-in-Öl-Dispersion hergestellt werden, wobei gleichzeitig die mit der niedrigen Leitfähigkeit infolge elektrostatischer Aufladung verbundenen Gefahren wirkungsvoll vermieden werden. Das so hergestellte Trennmittel ist zur Verwendung mit den bekannten spritz- und sprühtechnischen Verfahren ohne Einschränkungen geeignet und liefert die oben bereits angesprochenen hervorragenden Entformungseigenschaften.

## Patentansprüche

1. Verwendung eines Trennmittels bei der Herstellung von Polyurethan Formkörpern, wobei das Trennmittel als trennwirksame Substanzen Öle, Wachse, Silikone und/oder Seifen enthält, sowie Emulgatoren und andere übliche Additive, in einem Träger, wobei der Träger eine Mischung aus mindestens einem Kohlenwasserstoff und Wasser ist, **dadurch gekennzeichnet, daß** diese Mischung als Wasser-in-Öl-Dispersion vorliegt.

2. Verwendung nach Anspruch 1, **dadurch gekennzeichnet, daß** der (die) Kohlenwasserstoff(e) einen Siedepunkt zwischen 60 und 240°C aufweist (aufweisen).

3. Verwendung nach Anspruch 1 oder 2, **dadurch gekennzeichnet, daß** der Wasseranteil in einem Bereich zwischen 10 und 70 Gew.-% liegt.

4. Verwendung nach Anspruch 3, **dadurch gekennzeichnet, daß** der Wasseranteil bei maximal 60 Gew.-% liegt.

## Claims

1. Use of a release agent in the manufacture of polyurethane mouldings, wherein the release agent contains oils, waxes, silicones and/or soaps as substances having a release action, and emulsifiers and other conventional additives, in a support, wherein the support is a mixture of at least one hydrocarbon and water, **characterised in that** the said mixture is in the form of a water-in-oil dispersion.

2. Use according to claim 1, **characterised in that** the hydrocarbon or hydrocarbons has/have a boiling point between 60 and 240°C.

3. Use according to claim 1 or 2, **characterised in that** the water content is in a range of between 10 and 70% by weight.

4. Use according to claim 3, **characterised in that** the water content is 60% by weight maximum.

## Revendications

1. Utilisation d'un agent de démoulage lors de la fabrication de corps moulés de polyuréthane, l'agent de démoulage comprenant, à titre de substances efficaces pour le démoulage, des huiles, des cires, des silicones et/ou des savons, ainsi que des émulsifiants et autres additifs usuels, dans un support, le support étant un mélange constitué d'au moins un hydrocarbure et d'eau, **caractérisée en ce que** ce mélange se présente sous la forme d'une dispersion eau-dans-l'huile.

2. Utilisation selon la revendication 1, **caractérisée en ce que** le ou les hydrocarbures présentent un point d'ébullition entre 60 et 240°C.

3. Utilisation selon la revendication 1 ou 2, **caractérisée en ce que** la proportion d'eau se situe dans une plage allant de 10 à 70 % en poids.

4. Utilisation selon la revendication 3, **caractérisée en ce que** la proportion d'eau se situe au maximum à 60 % en poids.
